# EUROPEAN PATENT SPECIFICATION

(11) **EP 4 433 781 B1**
(45) Date of publication and mention of the grant of the patent: **01.07.2026**
(21) Application number: 22851033.5
(22) Date of filing: 21.11.2022
(51) Int. Cl.: G01F 25/10

(54) **METHOD AND SYSTEM FOR FLOWRATE MEASUREMENT CORRECTION OF A FLOWMETER**
VERFAHREN UND SYSTEM ZUR KORREKTUR DER STRÖMUNGSRATENMESSUNG EINES STRÖMUNGSMESSERS
PROCÉDÉ ET SYSTÈME DE CORRECTION DE MESURES DE DÉBIT D'UN DÉBITMÈTRE

(30) Priority: 21.11.2021 IN 202141053489
(43) Date of publication of application: 25.09.2024
(73) Proprietor: ABB Schweiz AG, 5400 Baden (CH)
(72) Inventor: DASGUPTA, Subhashish, Karnataka, Bangalore 560066 (IN); GU, Xiaotang, Stroud, Gloucestershire GL5 3HS (GB); LOVELESS, Edis, Bristol BS5 0HP (GB); NV, Raghu Kumar, Karnataka, Mysore 570016 (IN)
(74) Representative: Zimmermann & Partner Patentanwälte mbB
(86) International application number: PCT/IB2022/061219
(87) International publication number: WO 2023/089582

(56) References cited:
- JP-A- 2003 302 266
- US-A- 5 987 997
- US-A1- 2010 229 654
- US-A1- 2015 127 275
- US-B1- 6 644 132

## Description

### TECHNICAL FIELD

The present disclosure in general relates to flowmeters. More particularly, but not exclusively, to method and system for correcting flowrate measurements of a flowmeter.

### BACKGROUND

A flowmeter is an instrument which is used for measuring flowrate of fluids and gases in industries and homes. The flow rate refers to the speed at which a fluid moves through a structure (e.g., pipe) at a given time. Flowmeters are capable of measuring flowrates for almost all kinds of fluids including, but not limited to, water, steam, acids, alkalis, slurries, gases, and many others. Flowmeters can be classified into different types based on their uses and applications. Some popular types of flowmeters may include electromagnetic flowmeter, ultrasonic flowmeter, vortex flowmeter, Coriolis meter, thermal mass flowmeter, turbine flowmeter several other flowmeters (or other sensors like temperature sensors).

A measurement accuracy of a flowmeter may indicate as how close the measurement of flowmeter is to a true value. The measurement accuracy of the flowmeter may gradually degrade over time due to various factors such as, but not limited to, deposits on internal surfaces, contamination, aging, chemical attacks, internal and external damages etc. However, a major cause of concern in functioning of the flowmeter is degradation in the measurement accuracy due to flow distortion or velocity profile distortion because of presence of upstream flow distorting features (such as, but not limited to, bends, valves, strainers, elbows, and T-junctions, etc.) and also due to unexpected changes in physical properties of fluids passing through the flowmeter.

In existing systems, several techniques have been implemented to mitigate errors induced in flowmeter readings due to flow distorting features. For instance, conditioning the fluid flow prior to its entry into flowmeter section, has been a successful method. However, the method results in pressure drop, calls for changes in the flowmeter cross section, and/or usage of additional components. Thus, it is a challenge to design a universal flow conditioner for different types of disturbances (such as disturbance due to a bend, disturbance due to a valve etc.). An extreme situation commonly encountered is availability of not more than zero-to-one-time pipe diameter distance from an upstream bend for installing the flowmeter. Few techniques involve reforming the flow by using a flow reformer (e.g., a perforated plate) at a flowmeter inlet. However, reforming the flow by using the flow reformer at the flowmeter inlet induces high pressure drop and is therefore not a feasible method.

Also, non-invasive techniques to overcome flow distortion effects have been tested and implemented. However, these techniques involve additional components and call for undesirable changes to hardware of the flowmeter. For example, multiple electrodes can be used to obtain several sets of readings at various levels within a flowmeter pipe and averaging the readings to overcome flow distortion effects. However, the techniques expose the flowmeter to higher chances of leakage and incur additional hardware requirements with associated higher costs. Further, extended electrodes can be used to obtain a flow-average reading but are prone to other noise issues like particulate bombardment on electrode surfaces.

A limited number of attempts have been made in developing techniques to correct errors in flowmeter readings (or to improve flowmeter measurement accuracy) by calculations, using models to resolve physics of the flowmeter while accounting for flow distorting features. These models usually solve physics-based equations for calculating a corrected calibration factor for the flowmeter under field conditions. However, no model accounts for change in fluid physical properties and their impact on measurement accuracy. Consequently, the flowmeter fails to provide accurate reading of flowrate measurement. However, measurement of the accurate flowrate is critical in industrial processes to ensure optimization of such industrial processes and flowrate measurement by the flowmeter.

The document US 2015/127275 A1 is related to a method and apparatus for correcting flowrate measurements of a flow meter, based on receiving flow distorting parameters, flowmeter physical and operational parameters, a current flowrate value measured by the flowmeter, and fluid physical properties. Hence, it is required to determine an accurate calibration factor for the flow distortion to provide accurate reading of flowrate measurement and reduce adverse impact on industrial processes.

Thus, there exists a need for further improvements in the technology, especially for techniques that can provide accurate reading of flowrate measurement and reduce adverse impact on industrial processes by determining a corrected calibration factor for the flowmeter while taking into account various factors including the change in fluid physical properties.

The information disclosed in this background section is only for enhancement of understanding of the general background of the invention and should not be taken as an acknowledgement or any form of suggestion that this information forms the prior art already known to a person skilled in the art.

### SUMMARY

One or more shortcomings discussed above are overcome, and additional advantages are provided by the present disclosure. Additional features and advantages are realized through the techniques of the present disclosure. Other embodiments and aspects of the disclosure are described in detail herein and are considered a part of the disclosure.

An objective of the present disclosure is to determine a calibration factor for a flowmeter while considering various factors including a change in fluid physical properties.

Another object of the present disclosure is to provide accurate reading of flowrate measurement and reduce adverse impact on industrial processes by correcting the flowrate measurements of a flowmeter.

The above stated objects as well as other objects, features, and advantages of the present disclosure will become clear to those skilled in the art upon review of the following description, the attached drawings, and the appended claims.

According to an aspect of the present disclosure, methods and systems are provided for correcting flowrate measurement of a flowmeter.

In a non-limiting embodiment of the present disclosure, the present application discloses a method for correcting flowrate measurement of a flowmeter. The method may comprise receiving at least one of flow distorting parameters, flowmeter physical and operational parameters, a current flowrate value measured by the flowmeter, and fluid physical properties. The method may further comprise determining a flow regime based on the current flowrate value and selecting at least one flow equation from a plurality of flow equations based on the determined flow regime. The method may further comprise computing an output signal based on the selected flow equation and at least one of electromagnetic equations and/or physics-based equations, the flow distorting parameters, the flowmeter physical and operational parameters, and the fluid physical properties. The method may further comprise determining a corrected calibration factor using the computed output signal and the current flowrate value and transmitting the corrected calibration factor for correcting flowrate measurement of the flowmeter.

In another non-limiting embodiment of the present disclosure, the flow distorting parameters comprise a shape of a flow distorting feature at an upstream or a downstream of the flowmeter, a size of the flow distorting feature at the upstream or the downstream of the flowmeter, an orientation of the flow distorting feature with respect to the flowmeter, and the distance of the flow distorting feature from the flowmeter.

In another non-limiting embodiment of the present disclosure, the flowmeter physical parameters comprise a shape and a size of flowmeter components.

In another non-limiting embodiment of the present disclosure, determining the flow regime may comprise calculating Reynolds number based on the current flowrate value; and selecting a flow regime from a plurality of flow regimes based on the calculated Reynolds number.

In another non-limiting embodiment of the present disclosure, the plurality of flow regimes comprises a laminar flow regime, a transitional flow regime, and a turbulent flow regime.

In another non-limiting embodiment of the present disclosure, selecting the flow regime from the plurality of flow regimes may comprise: selecting the laminar flow regime when the Reynolds number is less or equal to a first value; selecting the transitional flow regime when the Reynolds number is between the first value and a second value, where the second value is greater than the first value; and selecting the turbulent flow regime when the Reynolds number is greater than or equal to the second value.

In another non-limiting embodiment of the present disclosure, determining the corrected calibration factor using the computed output signal and the current flowrate value may comprise dividing the computed output signal by the current flowrate value to determine the corrected calibration factor.

In another non-limiting embodiment of the present disclosure, selecting the at least one flow equation from the plurality of flow equations may comprise selecting a laminar flow momentum equation and associated equations when the flow regime is a laminar flow regime; selecting a transition fluid flow momentum equation and associated equations when the flow regime is a transitional flow regime; and selecting a turbulent flow equation and associated equations when the flow regime is a turbulent flow regime.

In another non-limiting embodiment of the present disclosure, the present application discloses a flowrate correction system for correcting flowrate of a flowmeter. The flowrate correction system may comprise a processor; and a memory communicatively coupled to the processor, where the memory stores processor-executable instructions, which on execution, cause the processor to receive at least one of flow distorting parameters, flowmeter physical and operational parameters, a current flowrate value measured by the flowmeter, and fluid physical properties. The instructions may further cause the processor to determine a flow regime based on the current flowrate value and select at least one flow equation from a plurality of flow equations based on the flow regime. The instructions may further cause the processor to compute an output signal based on the selected flow equation at least one of electromagnetic equations and/or physics-based equations, the flow distorting parameters, the flowmeter physical and operational parameters, and the fluid physical properties. The instructions may further cause the processor to determine a corrected calibration factor using the computed output signal and the current flowrate value and transmit the corrected calibration factor for correcting flowrate measurement of the flowmeter.

The foregoing summary is illustrative only and is not intended to be in any way limiting. In addition to the illustrative aspects, embodiments, and features described above, further aspects, embodiments, and features will become apparent by reference to the drawings and the following detailed description.

### BREIF DESCRIPTION OF DRAWINGS

Having thus described example embodiments of the present disclosure in general terms, reference will now be made to the accompanying drawings, which are not necessarily drawn to scale, and wherein:
**Figure 1(a)** illustrates an exemplary arrangement **100-1** showing a section of a flow pipe with a flowmeter mounted near a valve, in accordance with some embodiments of the present disclosure.
**Figure 1(b)** illustrates an exemplary arrangement **100-2** showing a section of a flow pipe with a flowmeter mounted near a bend, in accordance with some embodiments of the present disclosure.
**Figure 2** illustrates an exemplary environment **200** for correcting flowrate measurement of a flowmeter, in accordance with some embodiments of the present disclosure.
**Figure 3** illustrates a block diagram **300** of flowrate correction system for a flowmeter, in accordance with some embodiments of the present disclosure.
**Figure 4** illustrates a flowchart **400** illustrating a method for flowrate correction of a flowmeter, in accordance with some embodiments of the present disclosure.

It should be appreciated by those skilled in the art that any block diagrams herein represent conceptual views of the illustrative systems embodying the principles of the present disclosure. Similarly, it will be appreciated that any flowcharts, flow diagrams, state transition diagrams, pseudo code, and the like represent various processes which may be substantially represented in computer readable medium and executed by a computer or processor, whether or not such computer or processor is explicitly shown.

### DETAILED DISCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatus and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. The use of any term should not be taken to limit the scope of embodiments of the present invention.

As discussed in the background section, measurement accuracy of flowmeters degrades because of presence of upstream flow distorting features and unexpected changes in physical properties of fluids passing through the flowmeter. The impact of the flow distorting features on the measurement accuracy depends on the flow rate itself or flow regime. Variation in the physical properties of the fluid can also impair flowmeter measurement accuracy. A limited number of attempts have been made to develop models to compute flowmeter field error. The models usually solve physics-based equations to calculate a corrected calibration factor under field conditions. Such models replicate the flow distorting features (like a bend or valve) and generate a flow profile under the influence of the flow distorting features. The models then solve equations to calculate an output signal. The ratio of the output signal and the flowrate or velocity is the corrected calibration factor.

A gap in the model-based techniques is that while intensity of flow distortion depends on the shape, size, orientation, and distance of the flow distorting features from the flowmeter, it also depends on the flow regime (i.e., type of flow- laminar, transitional, or turbulent). In general, fluids in the laminar regime undergo severe distortion than those in the transitional or turbulent regime. However, no model accounts for change in fluid physical properties (i.e., the flow regime) while calculating calibration factor for the flowmeter thereby, impacting the measurement accuracy of the flowmeter.

To overcome these and other problems, the present disclosure provides techniques (methods and systems) for flowrate measurement correction of a flowmeter while taking into account prevailing flow regime and/or fluid properties. Specifically, the present disclosure describes a novel physics-based model (which can also be termed a digital twin of a flowmeter) which besides accounting for flow distorting features also accounts for the flow regime of the fluid and changes in the fluid physical properties while computing the calibration factor under a given flow distorting feature.

Thus, the present disclosure enables accurate measurement of flowrate during flow distortion of fluid in a flow pipe. The accurate measurement of flowrate is critical in industrial processes (such as, but not limited to, water treatment plants, oil plants, and pharmaceutical industries etc.) to ensure optimization of such industrial processes. Therefore, the techniques of the present disclosure reduce adverse impact on industrial processes by providing accurate reading of the flowrate. Furthermore, the techniques of the present disclosure avoid wet recalibration (i.e., removal of flowmeter from field and shipment to laboratory for determining corrected calibration factor) because the techniques of present disclosure are model-based (dry calibration).

In general, a flowmeter is an instrument which is used for measuring flowrate of fluids and gases in fields (industries, plants, and homes etc.). There are many types of flowmeters available today including, but limited to, electromagnetic flowmeter, ultrasonic flowmeter, vortex flowmeter, Coriolis meter, thermal mass flowmeter, turbine flowmeter, and several other flowmeters (or other sensors like temperature sensors) etc. A flow meter works by measuring the amount of fluid passing through or around the flow meter. Different types of flowmeters work in different ways, but with the same end goal i.e., to provide the most accurate measurements of flowrate. For example, an electromagnetic (EM) flowmeter works on Faraday's law of electromagnetic induction. The EM flowmeter comprises a pipe with an insulative liner (not shown) inside the pipe and in contact with the fluid in the pipe. On either side, the EM flowmeter includes a pair of coils, including a top coil and a bottom coil which are powered by currents for generating electromagnetic fields. Essentially, the generated electromagnetic field interacts with fluid velocity and produces an output signal (e.g., an induced electromotive force (EMF) or electrical signal) within the fluid domain. To measure the output signal, the EM flowmeter includes on either side, a pair of electrodes. In an embodiment, the EM flowmeter may comprise a display for displaying the determined flowrate of fluid in the flow pipe.

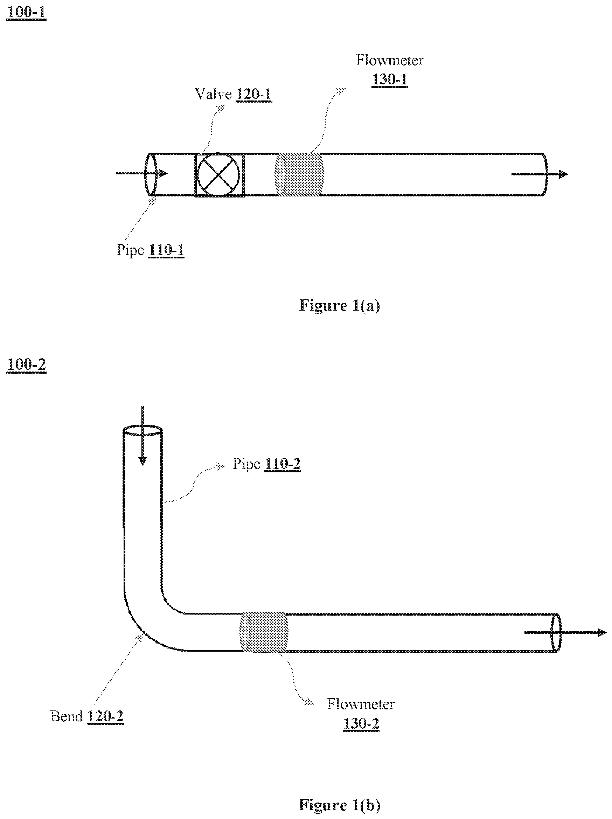

Generally, being proportional to velocity or flowrate, the output signal (i.e., EMF- in case of EM flowmeter) can be used to estimate the flowrate, by referring to a calibration factor provided during laboratory testing. The calibration factor is or directly related to a ratio of output signal and flowrate obtained under ideal laboratory conditions, where enough pipe length on either side of the flowmeter is ensured to avoid flow distortion. However, when the flowmeter is used in fields (e.g., industries), there may be situations where the flowmeter may be positioned near to an upstream or downstream flow distorting feature (e.g., a bend or a valve) and flow of fluid through the flowmeter may undergo distortion, resulting in flow measurement error or inaccurate flowrate measurement. This is further illustrated in Figures **1(a)** and **1(b)****.**

Referring now to **Figure 1(a)****,** which illustrates an exemplary arrangement **100-1** showing a section of a straight flow pipe having a flowmeter mounted therein/thereon, in accordance with some embodiments of the present disclosure. The arrangement **100-1** comprises a section of a cylindrical flow pipe **110-1** comprising a distorting feature (e.g., a valve **120-1)** and a flowmeter **130-1.** The flowmeter **130-1** may be mounted near to an upstream of the valve **120-1** for measuring flow of fluid through the pipe **110-1**. So, any fluid passing through the flowmeter **130-1** may undergo distortion due to the valve **120-1,** resulting in flow measurement error.

Referring now to **Figure 1(b)****,** which illustrates another exemplary arrangement **100-2** showing a section of a bent, flow pipe having a flowmeter mounted therein/thereon, in accordance with some embodiments of the present disclosure. The arrangement **100-2** comprises a section of a cylindrical flow pipe **110-2** comprising a distorting feature (e.g., a bend **120-2)** and a flowmeter **130-2.** The flowmeter **130-2** may be mounted near to an upstream of the bend **120-2** for measuring flow of fluid through the pipe **110-2.** Since the distorting feature is very near to the flowmeter **130-2,** any fluid passing through the flowmeter **130-2** may undergo distortion, resulting in flow measurement error (or inaccurate flowrate measurement).

In one non-limiting embodiment of the present disclosure, the intensity of the flow measurement error may depend on the amount of distortion caused by the flow distorting feature **120-1, 120-2** (collectively referred as **120)** which in turn depends on several factors including flow distorting parameters (e.g., a geometry, orientation, and/or and dimensions of the flow distorting feature **120);** physical and operational parameters of the flowmeter **130-1 130-2** (collectively referred as **130);** a current flowrate value measured by the flowmeter **130,** physical properties of fluid, and geometric features of the pipe **110.**

In one non-limiting embodiment, the flow distorting parameters may comprise, but not limited to, a shape of the flow distorting feature **120** at an upstream or a downstream of the flowmeter **130,** a size of the distorting feature **120** at the upstream or the downstream of the flowmeter **130**, an orientation of the flow distorting feature **120** with respect to the flowmeter **120,** and a distance of the flow distorting feature **120** from the flowmeter **130.** In one embodiment, the orientation of the flow distorting feature **120** with respect to the flowmeter **120** may describe a bend angle/curvature of the flow distorting feature **120** (e.g., in case of a bend). In another embodiment, the orientation of the flow distorting feature **120** with respect to the flowmeter **120** may describe a percentage opening of the flow distorting feature **120** (e.g., in case of a valve).

In one non-limiting embodiment of the present disclosure, the physical parameters of the flowmeter **130** may comprise a shape and a size of the flowmeter **130** and/or its components. The operational parameters of the flowmeter **130** may comprise the conditions under which the flowmeter **130** is operating including operating temperature, line pressure, a current flowrate measured by the flowmeter **130,** an original calibration factor of the flowmeter **130** (i.e., a calibration factor obtained by laboratory testing simulating ideal conditions) etc.

In one non-limiting embodiment of the present disclosure, the physical properties of the fluid may comprise density, viscosity, conductivity, and surface tension, but not limited thereto. The geometric features of the pipe **110** may comprise a length, diameter, and thickness of the pipe **110,** an entry length in terms of pipe internal diameter, but not limited thereto.

In one non-limiting embodiment of the present disclosure, the intensity of flow measurement error also depends on a flow regime. In general, the flow regime describes a type or nature of fluid flow through the pipe **110.** The fluid flowing through the pipe **110** may have a flow regime from a plurality of flow regimes comprising a laminar flow regime, a turbulent flow regime, and a transition flow regime. The flow regime plays an important role in design and operation of any fluid system including the flowmeter **130.**

The present disclosure takes into account the flow regime along with other parameters for determining a corrected calibration factor of the flowmeter **130** so as to eliminate the flow measurement error and provide accurate flowrate measurements.

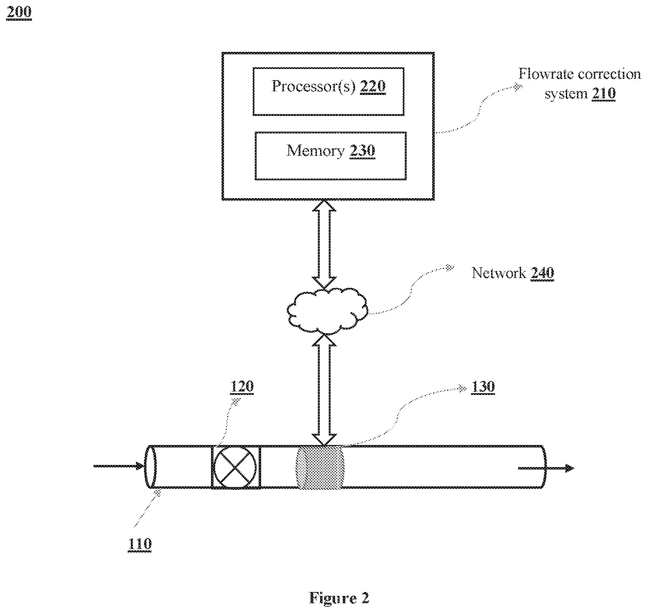

Referring now to **Figure 2****,** which illustrates an exemplary system **200** for correcting flowrate measurement of a flowmeter **130**, in accordance with some embodiments of the present disclosure. The system **200** may comprise at least one flowmeter **130** mounted on a structure **110** (e.g., a pipe) and a flowmeter correction system **210** communicatively coupled with the flowmeter **130** via a network **240.** The pipe **110** may comprise at least one flow distorting feature **120** near the flowmeter **130.** The flowmeter may be located upstream of the flow distorting feature **120.** The flowmeter correction system **210** may comprise at least one processor **220** and a memory **230.** In one non-limiting embodiment, the flowmeter **130** may also comprise at least one processor and memory (not shown). The flowmeter **130** may also comprise various interfaces and transceivers for establishing wired and/or wireless communication with one or more devices/systems (e.g., the flowrate correction system **210).**

The network **240** may comprise a data network such as, but not restricted to, the Internet, Local Area Network (LAN), Wide Area Network (WAN), Metropolitan Area Network (MAN), etc. In certain embodiments, the network **240** may include a wireless network, such as, but not restricted to, a cellular network and may employ various technologies including Enhanced Data rates for Global Evolution (EDGE), General Packet Radio Service (GPRS), Global System for Mobile Communications (GSM), Internet protocol Multimedia Subsystem (IMS), Universal Mobile Telecommunications System (UMTS) etc. In one embodiment, the network **240** may include or otherwise cover networks or subnetworks, each of which may include, for example, a wired or wireless data pathway.

The at least one processor **220** may include, but not restricted to, a general-purpose processor, a Field Programmable Gate Array (FPGA), an Application Specific Integrated Circuit (ASIC), a Digital Signal Processor (DSP), microprocessors, microcomputers, microcontrollers, central processing units, state machines, logic circuitries, and/or any devices that manipulate signals based on operational instructions. A processor may also be implemented as a combination of computing devices, e.g., a combination of a DSP and a microprocessor, a plurality of microprocessors, one or more microprocessors in conjunction with a DSP core, or any other such configuration.

The memory **230** may be communicatively coupled to the at least one processor **220.** The memory **230** may comprise various instructions, information related to one or more flowmeters, fluids, pipes, one or more equations etc. The memory **230** may include a Random-Access Memory (RAM) unit and/or a non-volatile memory unit such as a Read Only Memory (ROM), optical disc drive, magnetic disc drive, flash memory, Electrically Erasable Read Only Memory (EEPROM), a memory space on a server or cloud and so forth.

In one non-limiting embodiment of the present disclosure, the at least one processor **220** may receive one or more parameters related to the flowmeter **130,** the flow distorting feature **120,** the fluid passing through the pipe **110,** and/or other miscellaneous parameters, as discussed above. For instance, the at least one processor **220** may receive the flow distorting parameters; physical and operational parameters of the flowmeter **130;** a current flowrate value measured by the flowmeter **130,** physical properties of fluid. In one embodiment, these parameters may be received from the flowmeter **130** and its associated infrastructure. In another embodiment, these parameters may be supplied by a user to the flowrate correction system **210.** The at least one processor **220** may also receive data related to one or more other properties related to the fluid such as temperature, pressure, specific volume, specific weight, specific gravity etc. In an embodiment, the associated infrastructure of the flowmeter **130** may refer to the pipe **110** on the which the flowmeter **130** is installed and/or the features upstream and/or downstream of the flowmeter **130** like valves, bends etc.

In one non-limiting embodiment, the at least one processor **220** may determine a particular flow regime associated with the fluid passing through the pipe **110** from a plurality of flow regimes based on one or more of the received parameters. The plurality of flow regimes may comprise a laminar flow regime, a transitional flow regime, and a turbulent flow regime. In one embodiment, the at least one processor may determine the flow regime based on the current flowrate value measured by the flowmeter **130.** Although the current flowrate value is not the corrected flowrate value, but it is accurate enough to determine the flow regime of the fluid.

In one non-limiting embodiment, the at least one processor **220** may determine/calculate a Reynolds number (denoted as *'Re*') based on the current flowrate value. The Reynolds number is calculated using conventionally known techniques based at least on the flowrate/flow velocity measured by the flowmeter **130.** In general, the Reynolds number is a dimensionless number, whose value gives an idea of whether the fluid flow is a turbulent or laminar or transitional.

The at least one processor **220** may then determine the flow regime of the fluid passing through the pipe based on the calculated Reynolds number. For instance, the at least one processor **220** may compare the calculated Reynolds number with present numbers for selecting the flow regime of the fluid from a plurality of flow regimes. The at least one processor **220** may select the laminar flow regime from the plurality of flow regimes when the Reynolds number is less or equal to a first value. Further, the at least one processor **220** may select the transitional flow regime from the plurality of flow regimes when the Reynolds number is between the first value and a second value. Furthermore, the at least one processor **220** may select the turbulent flow regime from the plurality of flow regimes when the Reynolds number is greater than or equal to the second value. It may be noted here that the second value is greater than the first value.

Consider an example, where the first value is 2000 and the second value of 3000. Now, if the value of Reynolds Number is less than or equal to 2000, the flow regime is laminar flow regime; if the value of Reynolds Number is more than 2000 and less than 3000, the flow regime is transitional flow regime; and if the value of Reynolds Number is greater than or equal to 3000, the flow regime is transitional flow regime. It may be noted that these limits are only for exemplary purpose and can tolerate a variation of +/- 20%).

In general, each flow regime may have some equations (e.g., energy equations, momentum equations, mass equations etc.) associated with it. The at least one processor **220** may select at least one flow equation from a plurality of flow equations based on the selected flow regime. For instance, the at least one processor **220** may select a laminar flow momentum equation and associated equations when the flow regime is a laminar flow regime. The laminar flow momentum equations and associated equations may comprise at least one of: mass conservation equation, momentum conservation equation, and energy conservation equation for the laminar flow regime.

Similarly, when the flow regime is a transitional flow regime, the at least one processor **220** may select a transition fluid flow momentum equation and associated equations. The transition fluid flow momentum equation and associated equations may comprise at least one of: mass conservation equation, momentum conservation equation, and energy conservation equation associated with the transitional flow regime. The transition fluid flow momentum equation and associated equations may additionally comprise wall function equations.

Further, the at least one processor **220** may select a turbulent flow equation and associated equations when the flow regime is a turbulent flow regime. The turbulent flow equation and associated equations may comprise at least one of: mass conservation equation, momentum conservation equation, and energy conservation equation associated with the turbulent flow regime. The turbulent flow equation and associated equations may additionally comprise kinetic energy production equation, dissipation, and wall function equations.

In one non-limiting embodiment of the present disclosure, the at least one processor **220** may then compute an output signal of the flowmeter **130** based on the selected at least one flow equation and further based on one or more of the received parameters (i.e., the flow distortion related parameters, the flowmeter physical and operational parameters, and the fluid physical properties). In one embodiment, the at least one processor may additionally use one or more electromagnetic equations and/or physics-based equations for computing the output signal. The electromagnetic and/or physics based equations may comprise Maxwell's equations: Gauss law equation, Gauss law equation for magnetism, Faraday's law of induction, and/or Ampere's circuital law.

In one non-limiting embodiment of the present disclosure, the at least processor **220** may determine a corrected calibration factor for the flowmeter **130** based on the determined output signal and the received current flowrate value measured by the flowmeter **130.** Particularly, the at least one processor **220** may divide the determined output signal by the received current flowrate value to determine the corrected calibration factor.

In one non-limiting embodiment of the present disclosure, the at least one processor **220** may provide transmit the corrected calibration factor. In one embodiment, the corrected calibration factor may be transmitted to the flowmeter **130** or to any other computing device which may use the corrected calibration factor for correcting flowrate measurements of the flowmeter **130.** In one embodiment, the original calibration factor of the flowmeter **130** (i.e., a calibration factor obtained by laboratory testing simulating ideal conditions) may be replaced with the corrected calibration factor for correcting the flowrate measurements of the flowmeter **130.**

In the exemplary embodiment of **Figure 2****,** the flowrate correction system **210** has been shown at a remote location from the flowmeter **130** and is communicating with the flowmeter **130** via the network **240.** However, the present disclosure is not limited thereto and the flowrate correction system **210** may be implemented as a part of the flowmeter **130** itself. The various operations described above may be performed by a flowmeter processor (not shown) provided with the flowmeter **130.** In other words, the present disclosure may facilitate a smart flowmeter with inbuilt self-calibrating computational model that can provide the corrected calibration factor for correcting the flowrate measurements of the flowmeter **130.**

In one non-limiting embodiment of the present disclosure, the flowrate correction system **210** may be run offline before installation of the flowmeter **130** or during operation of the flowmeter **130.** In one non-limiting embodiment, flowrate correction system **210** may dynamically update the calibration factor of the flowmeter **130** whenever there is change in any parameter associated with the fluid/flowmeter/pipe. For example, if an existing valve near the flowmeter **130** is replaced with a new value having different geometry/configuration, or if a new flow distorting feature is added near the flowmeter **130,** or if a fluid flowing through the pipe is changed, and like, then the calibration factor might need to be updated. In such scenarios, the flowrate correction system **210** may dynamically receive feedback of various parameters (e.g., flow distorting features and/or fluid properties) from the flowmeter **130** and/or associated devices. For example, the flowmeter processor may dynamically transmit parameters necessary for correcting the flowrate measurements to the flowrate correction system **210** which may then dynamically calculate the corrected calibration factor using the techniques of the present disclosure and may then replace an existing calibration factor of the flowmeter **130.**

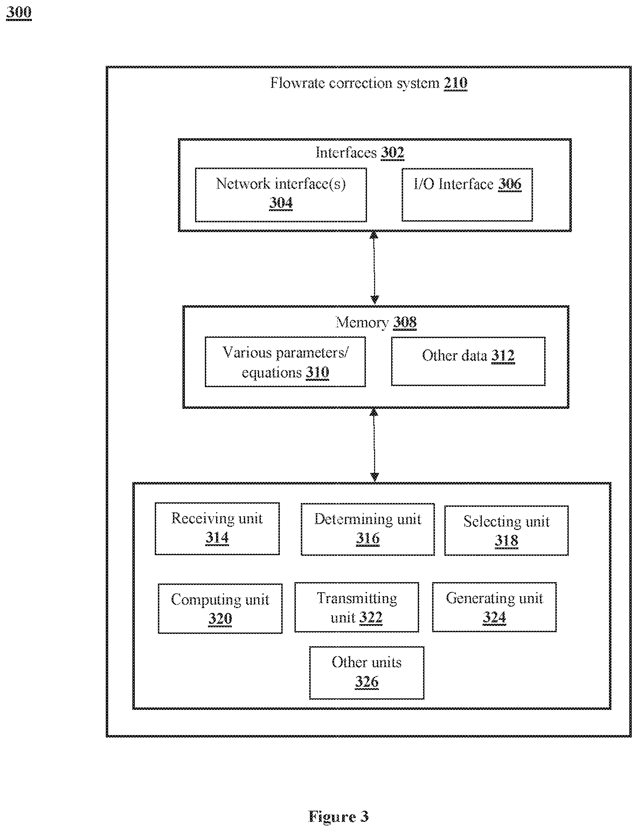

Referring now to **Figure 3****,** which shows a block diagram of the flowrate correction system **210,** in accordance with some embodiments of the present disclosure. In one non-limiting embodiment of the present disclosure, the flowrate correction system **210** may comprise various other hardware components such as various interfaces **302,** memory **308,** and various units or means as shown in **Figure 3****.** The units may comprise a receiving unit **314,** a determining unit **316,** a selecting unit **318,** a computing unit **320,** a transmitting unit **322,** a generating unit **324,** and various other units **326.** The other units **326** may comprise a display unit, a calibrating unit etc. In an embodiment, the units **314-326** may be dedicated hardware units capable of executing one or more instructions stored in the memory **308** for performing various operations of the flowrate correction system **210.** In another embodiment, the units **314-326** may be software modules stored in the memory **308** which may be executed by the at least one processor **220** for performing the operations of the flowrate correction system **210.**

The interfaces **302** may include a variety of software and hardware interfaces, for example, a web interface, a graphical user interface, an input device-output device (I/O) interface **306,** a network interface **304** and the like. The I/O interfaces **306** may allow the flowrate correction system **210** to interact with other devices (e.g., the flowmeter **130)** directly or through other devices. The network interface **304** may allow the flowrate correction system **210** to interact with one or more devices either directly or via the network **240.**

The memory **308** may comprise various parameters and/or equations **310** (discussed above), and other various types of data **312** (such as one or more computer executable instructions). The memory **308** may be same as the memory **230.**

In the present disclosure, the pipes **110-1, 110-2** have been collectively referred by reference numeral **110.** In the present disclosure it has been shown the fluid is flowing through pipes. However, the present disclosure is not limited thereto, and the techniques described in the disclosure are equally applicable for measuring flowrate of fluid passing through any structure at/on/in which a flowmeter can be mounted. Further, the valve **120-1** and the bend **120-2** have been collectively referred as flow distorting features/elements **120.** Furthermore, the flowmeters **130-1** and **130-2** have been collectively referenced using the reference numeral **130.** The techniques of the present disclosure are equally applicable for pipes having more than one flow distorting features.

The present disclosure provides reliable and accurate flowmeters which are capable of providing quality performance under extreme conditions. Further, due to model-based approach of present disclosure, the need to remove the flowmeter from field for calibration is avoided thereby, saving production time. Furthermore, the techniques of present disclosure ensure flow profile independence without inducing pressure drop or additional energy expenditure.

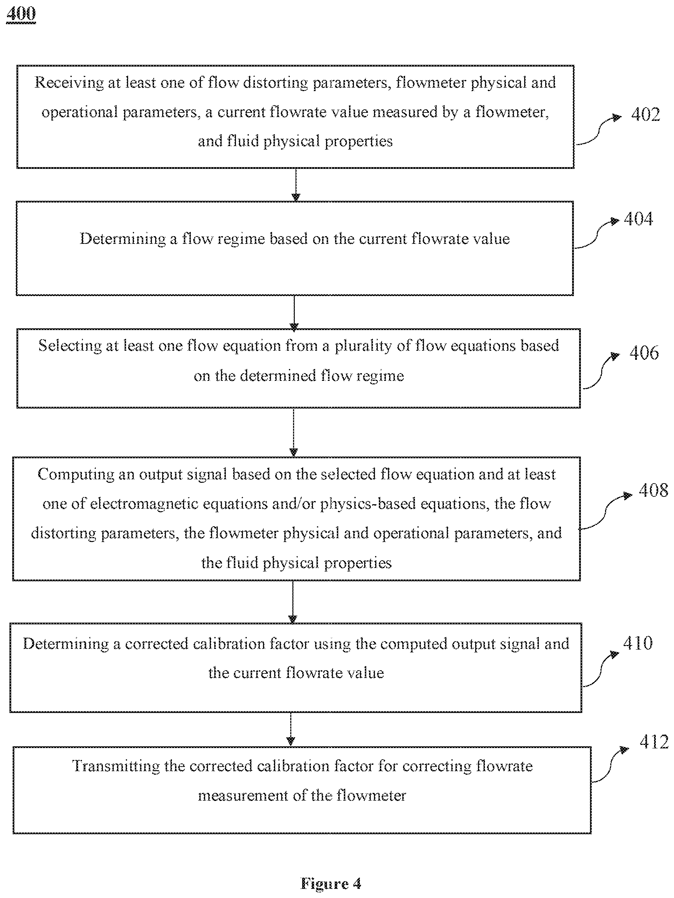

Referring now to **Figure 4****,** a flowchart is described illustrating an exemplary method **400** for correcting flowrate measurements of a flowmeter **130,** according to an embodiment of the present disclosure. The method **400** is merely provided for exemplary purposes, and embodiments are intended to include or otherwise cover any methods or procedures for correcting flowrate measurements of the flowmeter **130.**

The method **400** may include, at block **402,** receiving at least one of flow distorting parameters, flowmeter physical and operational parameters, a current flowrate value measured by the flowmeter **130,** and fluid physical properties. The operations of block **402** may be performed by the at least one processor **220** of Figure 2 or by the receiving unit **314** of Figure 3.

In one non-limiting embodiment, the flow distorting parameters may comprise a shape of a flow distorting feature **120** at an upstream or a downstream of the flowmeter **130,** a size of the flow distorting feature **120** at the upstream or the downstream of the flowmeter **130,** an orientation of the flow distorting feature **120** with respect to the flowmeter **130,** and a distance of the flow distorting feature **120** from the flowmeter **130.**

In another non-limiting embodiment, flowmeter physical parameters may comprise a shape and a size of flowmeter components.

At block **404,** the method **400** may include determining a flow regime based on the current flowrate value. The operations of block **404** may be performed by the at least one processor **220** of Figure 2 or by the determining unit **316** of Figure 3.

In one non-limiting embodiment of the present disclosure, the operation of determining the flow regime may comprise calculating Reynolds number based on the current flowrate value; and selecting a flow regime from a plurality of flow regimes based on the calculated Reynolds number.

In one non-limiting embodiment of the present disclosure, the plurality of flow regimes may comprise a laminar flow regime, a transitional flow regime, and a turbulent flow regime. Further, the operation of selecting the flow regime from the plurality of flow regimes may comprise selecting the laminar flow regime when the Reynolds number is less or equal to a first value; selecting the transitional flow regime when the Reynolds number is between the first value and a second value, where the second value is greater than the first value; and selecting the turbulent flow regime when the Reynolds number is greater than or equal to the second value.

At block **406,** the method **400** may include selecting at least one flow equation from a plurality of flow equations based on the determined flow regime. The operations of block **406** may be performed by the at least one processor **220** of Figure 2 or by the selecting unit **318** of Figure 3.

In one non-limiting embodiment of the present disclosure, selecting the at least one flow equation from the plurality of flow equations may comprise selecting a laminar flow momentum equation and associated equations when the flow regime is a laminar flow regime; selecting a transition fluid flow momentum equation and associated equations when the flow regime is a transitional flow regime; and selecting a turbulent flow equation and associated equations when the flow regime is a turbulent flow regime.

At block **408,** the method **400** may include computing an output signal based on the selected flow equation and at least one of electromagnetic equations and/or physics-based equations, the flow distorting parameters, the flowmeter physical and operational parameters, and the fluid physical properties. The operations of block **408** may be performed by the at least one processor **220** of Figure 2 or by the computing unit **320** of Figure 3.

At block **410,** the method **400** may include determining a corrected calibration factor using the computed output signal and the current flowrate value. The operations of block **410** may be performed by the at least one processor **220** of Figure 2 or by the determining unit **316** of Figure 3.

In one non-limiting embodiment of the present disclosure, determining the corrected calibration factor using the computed output signal and the current flowrate value may comprise dividing the computed output signal by the current flowrate value to determine the corrected calibration factor.

At block **412,** the method **400** may include transmitting the corrected calibration factor for correcting flowrate measurement of the flowmeter **130.** The operations of block **412** may be performed by the at least one processor **220** of Figure 2 or by the transmitting unit **322** of Figure 3.

The order in which the various operations of the method **400** are described is not intended to be construed as a limitation, and any number of the described method blocks can be combined in any order to implement the method. Additionally, individual blocks may be deleted from the methods without departing from the scope of the subject matter described herein. Furthermore, the methods can be implemented in any suitable hardware, software, firmware, or combination thereof.

The various operations of method described above may be performed by any suitable means capable of performing the corresponding functions. The means may include various hardware and/or software component(s) and/or module(s), including, but not limited to the at least one processor **220** of **Figure 2** and the various units **of** **Figure 3****.** Generally, where there are operations illustrated in Figures, those operations may have corresponding counterpart means-plus-function components.

It may be noted here that the subject matter of some or all embodiments described with reference to **Figures 1-3** may be relevant for the methods and system and the same is not repeated for the same of brevity.

In a non-limiting embodiment of the present disclosure, one or more non-transitory computer-readable media may be utilized for implementing the embodiments consistent with the present disclosure. A computer-readable media refers to any type of physical memory (such as the memory **230)** on which information or data readable by a processor may be stored. Thus, a computer-readable media may store one or more instructions for execution by the at least one processor **220,** including instructions for causing the at least one processor **220** to perform steps or stages consistent with the embodiments described herein. The term "computer-readable media" should be understood to include tangible items and exclude carrier waves and transient signals. By way of example, and not limitation, such computer-readable media can comprise Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Thus, certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the appended claims.

### REFERENCE NUMERALS:

| **Reference Number** | **Description** |
|---|---|
| 100-1, 100-2 | Arrangements |
| 110-1, 110-2, 110 | Flow pipe |
| 130-1, 130-2, 130 | Flowmeter |
| 120-1, 120-2, 120 | Flow distorting feature |
| 200 | System |
| 210 | Flowrate correction system |
| 220 | Processor |
| 230 | Memory |
| 240 | Network |
| 300 | Block diagram |
| 302 | Interfaces |
| 304 | Network interface |
| 306 | I/O interface |
| 308 | Memory |
| 314 | Receiving unit |
| 316 | Determining unit |
| 318 | Selecting unit |
| 320 | Computing unit |
| 322 | Transmitting unit |
| 324 | Generating unit |
| 326 | Other units |
| 400 | Method |

## Claims

1. A method for correcting flowrate measurements of a flowmeter, the method comprising:
receiving at least one of flow distorting parameters, flowmeter physical and operational parameters, a current flowrate value measured by the flowmeter, and fluid physical properties;
determining a flow regime based on the current flowrate value;
selecting at least one flow equation from a plurality of flow equations based on the determined flow regime;
computing an output signal based on the selected flow equation and at least one of electromagnetic equations and/or physics-based equations, the flow distorting parameters, the flowmeter physical and operational parameters, and the fluid physical properties;
determining a corrected calibration factor using the computed output signal and the current flowrate value; and
transmitting the corrected calibration factor for correcting flowrate measurement of the flowmeter.

2. The method as claimed in claim 1, wherein the flow distorting parameters comprise a shape of a flow distorting feature at an upstream or a downstream of the flowmeter, a size of the flow distorting feature at the upstream or the downstream of the flowmeter, an orientation of the flow distorting feature with respect to the flowmeter, and a distance of the flow distorting feature from the flowmeter.

3. The method as claimed in claim 1, wherein the flowmeter physical parameters comprise a shape and a size of flowmeter components.

4. The method as claimed in claim 1, wherein determining the flow regime comprises:
calculating Reynolds number based on the current flowrate value; and
selecting a flow regime from a plurality of flow regimes based on the calculated Reynolds number.

5. The method as claimed in claim 4, wherein the plurality of flow regimes comprises a laminar flow regime, a transitional flow regime, and a turbulent flow regime.

6. The method as claimed in claim 5, wherein selecting the flow regime from the plurality of flow regimes comprises:
selecting the laminar flow regime when the Reynolds number is less or equal to a first value;
selecting the transitional flow regime when the Reynolds number is between the first value and a second value, where the second value is greater than the first value; and
selecting the turbulent flow regime when the Reynolds number is greater than or equal to the second value.

7. The method as claimed in claim 1, wherein determining the corrected calibration factor using the computed output signal and the current flowrate value comprises:
dividing the computed output signal by the current flowrate value to determine the corrected calibration factor.

8. The method as claimed in claim 1, wherein selecting the at least one flow equation from the plurality of flow equations comprises:
selecting a laminar flow momentum equation and associated equations when the flow regime is a laminar flow regime;
selecting a transition fluid flow momentum equation and associated equations when the flow regime is a transitional flow regime; and
selecting a turbulent flow equation and associated equations when the flow regime is a turbulent flow regime.

9. A flowrate correction system for correcting flowrate measurements of a flowmeter (130) , the flowrate correction system comprising:
a processor (220) ; and
a memory (308) communicatively coupled to the processor, wherein the memory stores processor-executable instructions, which on execution, cause the processor to:
receive at least one of flow distorting parameters, flowmeter physical and operational parameters, a current flowrate value measured by the flowmeter, and fluid physical properties;
determine a flow regime based on the current flowrate value;
select at least one flow equation from a plurality of flow equations based on the flow regime;
compute an output signal based on the selected flow equation at least one of electromagnetic equations and/or physics-based equations, the flow distorting parameters, the flowmeter physical and operational parameters, and the fluid physical properties;
determine a corrected calibration factor using the computed output signal and the current flowrate value; and
transmit the corrected calibration factor for correcting flowrate measurement of the flowmeter.

10. The flowrate correction system as claimed in claim 9, wherein the flow distorting parameters comprise a shape of a flow distorting feature at an upstream or a downstream of the flowmeter, a size of the flow distorting feature at the upstream or the downstream of the flowmeter, an orientation of the flow distorting feature with respect to the flowmeter, and a distance of the flow distorting feature from the flowmeter.

11. The flowrate correction system as claimed in claim 9, wherein the flowmeter physical parameters comprise a shape and a size of flowmeter components.

12. The flowrate correction system as claimed in claim 9, wherein to determine the flow regime, the processor is configured to:
calculate Reynolds number based on the current flowrate value; and
select a flow regime from a plurality of flow regimes based on the calculated Reynolds number, wherein the plurality of flow regimes comprises a laminar flow regime, a transitional flow regime or a turbulent flow regime.

13. The flowrate correction system as claimed in claim 12, wherein the processor is configured to:
select the laminar flow regime when the Reynolds number is less or equal to a first value;
select the transitional flow regime when the Reynolds number is between the first value and a second value, where the second value is greater than first value; and
select the turbulent flow regime when the Reynolds number is greater than or equal to the second value.

14. The flowrate correction system as claimed in claim 9, wherein to determine a corrected calibration factor, the processor is configured to:
divide the computed output signal by the current flowrate value to determine the corrected calibration factor.

15. The flowrate correction system as claimed in claim 9, to select the at least one flow equation from the plurality of flow equations, the processor is configured to:
select a laminar flow momentum equation and associated equations when the flow regime is a laminar flow regime;
select a transition fluid flow momentum equation and associated equations when the flow regime is a transitional flow regime; and
select a turbulent flow equation and associated equations when the flow regime is a turbulent flow regime.

## Patentansprüche

1. Verfahren zum Korrigieren von Durchflussmessungen eines Durchflussmessers, wobei das Verfahren Folgendes umfasst:
Empfangen von Strömungsverzerrungsparametern und/oder physikalischen und Betriebsparametern des Durchflussmessers und/oder einem durch den Durchflussmesser gemessenen aktuellen Durchflusswert und/oder physikalischen Fluideigenschaften;
Bestimmen eines Strömungsregimes basierend auf dem aktuellen Durchflusswert;
Auswählen mindestens einer Strömungsgleichung aus mehreren Strömungsgleichungen basierend auf dem bestimmten Strömungsregime;
Berechnen eines Ausgangssignals basierend auf der ausgewählten Strömungsgleichung und mindestens einem von elektromagnetischen Gleichungen und/oder physikbasierten Gleichungen, den Strömungsverzerrungsparametern, den physikalischen und Betriebsparametern des Durchflussmessers und den physikalischen Fluideigenschaften;
Bestimmen eines korrigierten Kalibrierungsfaktors unter Verwendung des berechneten Ausgangssignals und des aktuellen Durchflusswerts; und
Übertragen des korrigierten Kalibrierungsfaktors zur Korrektur der Durchflussmessung des Durchflussmessers.

2. Verfahren nach Anspruch 1, wobei die Strömungsverzerrungsparameter eine Form eines Strömungsverzerrungsmerkmals an einem stromaufwärts oder einem stromabwärts gelagerten Punkt des Durchflussmessers, eine Größe des Strömungsverzerrungsmerkmals an dem stromaufwärts oder dem stromabwärts gelagerten Punkt des Durchflussmessers, eine Orientierung des Strömungsverzerrungsmerkmals in Bezug auf den Durchflussmesser und einen Abstand des Strömungsverzerrungsmerkmals von dem Durchflussmesser umfassen.

3. Verfahren nach Anspruch 1, wobei die physikalischen Parameter des Durchflussmessers eine Form und eine Größe von Durchflussmesserkomponenten umfassen.

4. Verfahren nach Anspruch 1, wobei das Bestimmen des Strömungsregimes Folgendes umfasst:
Berechnen der Reynolds-Zahl basierend auf dem aktuellen Durchflusswert; und
Auswählen eines Strömungsregimes aus einer Vielzahl von Strömungsregimen basierend auf der berechneten Reynolds-Zahl.

5. Verfahren nach Anspruch 4, wobei die Vielzahl von Strömungsregimen ein laminares Strömungsregime, ein Übergangsströmungsregime und ein turbulentes Strömungsregime umfassen.

6. Verfahren nach Anspruch 5, wobei das Auswählen des Strömungsregimes aus der Vielzahl von Strömungsregimen Folgendes umfasst:
Auswählen des laminaren Strömungsregimes, wenn die Reynolds-Zahl kleiner oder gleich einem ersten Wert ist;
Auswählen des Übergangsströmungsregimes, wenn die Reynolds-Zahl zwischen dem ersten Wert und einem zweiten Wert liegt, wobei der zweite Wert größer als der erste Wert ist; und
Auswählen des turbulenten Strömungsregimes, wenn die Reynolds-Zahl größer oder gleich dem zweiten Wert ist.

7. Verfahren nach Anspruch 1, wobei das Bestimmen des korrigierten Kalibrierungsfaktors unter Verwendung des berechneten Ausgangssignals und des aktuellen Durchflusswerts Folgendes umfasst:
Teilen des berechneten Ausgangssignals durch den aktuellen Durchflusswert, um den korrigierten Kalibrierungsfaktor zu bestimmen.

8. Verfahren nach Anspruch 1, wobei das Auswählen der mindestens einen Strömungsgleichung aus der Vielzahl von Strömungsgleichungen Folgendes umfasst:
Auswählen einer laminaren Strömungsmomentumgleichung und assoziierter Gleichungen, wenn das Strömungsregime ein laminares Strömungsregime ist;
Auswählen einer Übergangsfluidströmungsmomentumgleichung und assoziierter Gleichungen, wenn das Strömungsregime ein Übergangsströmungsregime ist; und
Auswählen einer turbulenten Strömungsgleichung und assoziierter Gleichungen, wenn das Strömungsregime ein turbulentes Strömungsregime ist.

9. Durchflusskorrektursystem zum Korrigieren von Durchflussmessungen eines Durchflussmessers (130), wobei das Durchflusskorrektursystem Folgendes umfasst:
einen Prozessor (220); und
einen Speicher (308), der kommunikativ mit dem Prozessor gekoppelt ist, wobei der Speicher prozessorausführbare Anweisungen speichert, die, wenn sie ausgeführt werden, den Prozessor veranlassen zum:
Empfangen von Strömungsverzerrungsparametern und/oder physikalischen und Betriebsparametern des Durchflussmessers und/oder einem durch den Durchflussmesser gemessenen aktuellen Durchflusswert und/oder physikalischen Fluideigenschaften;
Bestimmen eines Strömungsregimes basierend auf dem aktuellen Durchflusswert;
Auswählen mindestens einer Strömungsgleichung aus mehreren Strömungsgleichungen basierend auf dem Strömungsregime,
Berechnen eines Ausgangssignals basierend auf der ausgewählten Strömungsgleichung, mindestens einem von elektromagnetischen Gleichungen und/oder physikbasierten Gleichungen, den Strömungsverzerrungsparametern, den physikalischen und Betriebsparametern des Durchflussmessers und den physikalischen Fluideigenschaften;
Bestimmen eines korrigierten Kalibrierungsfaktors unter Verwendung des berechneten Ausgangssignals und des aktuellen Durchflusswerts; und
Übertragen des korrigierten Kalibrierungsfaktors zur Korrektur der Durchflussmessung des Durchflussmessers.

10. Durchflusskorrektursystem nach Anspruch 9, wobei die Strömungsverzerrungsparameter eine Form eines Strömungsverzerrungsmerkmals an einem stromaufwärts oder einem stromabwärts gelagerten Punkt des Durchflussmessers, eine Größe des Strömungsverzerrungsmerkmals an dem stromaufwärts oder dem stromabwärts gelagerten Punkt des Durchflussmessers, eine Orientierung des Strömungsverzerrungsmerkmals in Bezug auf den Durchflussmesser und einen Abstand des Strömungsverzerrungsmerkmals von dem Durchflussmesser umfassen.

11. Durchflusskorrektursystem nach Anspruch 9, wobei die physikalischen Parameter des Durchflussmessers eine Form und eine Größe von Durchflussmesserkomponenten umfassen.

12. Durchflusskorrektursystem nach Anspruch 9, wobei der Prozessor zum Bestimmen des Strömungsregimes ausgelegt ist zum:
Berechnen der Reynolds-Zahl basierend auf dem aktuellen Durchflusswert; und
Auswählen eines Strömungsregimes aus einer Vielzahl von Strömungsregimen basierend auf der berechneten Reynolds-Zahl, wobei die Vielzahl von Strömungsregimen ein laminares Strömungsregime, ein Übergangsströmungsregime oder ein turbulentes Strömungsregime umfassen.

13. Durchflusskorrektursystem nach Anspruch 12, wobei der Prozessor ausgelegt ist zum:
Auswählen des laminaren Strömungsregimes, wenn die Reynolds-Zahl kleiner oder gleich einem ersten Wert ist;
Auswählen des Übergangsströmungsregimes, wenn die Reynolds-Zahl zwischen dem ersten Wert und einem zweiten Wert liegt, wobei der zweite Wert größer als der erste Wert ist; und
Auswählen des turbulenten Strömungsregimes, wenn die Reynolds-Zahl größer oder gleich dem zweiten Wert ist.

14. Durchflusskorrektursystem nach Anspruch 9, wobei der Prozessor zum Bestimmen eines korrigierten Kalibrierungsfaktors ausgelegt ist zum:
Teilen des berechneten Ausgangssignals durch den aktuellen Durchflusswert, um den korrigierten Kalibrierungsfaktor zu bestimmen.

15. Durchflusskorrektursystem nach Anspruch 9, wobei der Prozessor zum Auswählen der mindestens einen Strömungsgleichung aus der Vielzahl von Strömungsgleichungen ausgelegt ist zum:
Auswählen einer laminaren Strömungsmomentumgleichung und assoziierter Gleichungen, wenn das Strömungsregime ein laminares Strömungsregime ist;
Auswählen einer Übergangsfluidströmungsmomentumgleichung und assoziierter Gleichungen, wenn das Strömungsregime ein Übergangsströmungsregime ist; und
Auswählen einer turbulenten Strömungsgleichung und assoziierter Gleichungen, wenn das Strömungsregime ein turbulentes Strömungsregime ist.

## Revendications

1. Procédé de correction de mesures de débit d'un débitmètre, le procédé comprenant :
la réception d'au moins l'un des éléments suivants : des paramètres de distorsion d'écoulement, des paramètres physiques et de fonctionnement du débitmètre, une valeur de débit actuelle mesurée par le débitmètre, et des propriétés physiques du fluide ;
la détermination d'un régime d'écoulement sur la base de la valeur de débit actuelle ;
la sélection d'au moins une équation d'écoulement parmi une pluralité d'équations d'écoulement sur la base du régime d'écoulement déterminé ;
le calcul d'un signal de sortie sur la base de l'équation d'écoulement sélectionnée et d'au moins l'un des éléments suivants : des équations électromagnétiques et/ou des équations basées sur la physique, les paramètres de distorsion d'écoulement, les paramètres physiques et de fonctionnement du débitmètre, et les propriétés physiques du fluide ;
la détermination d'un facteur d'étalonnage corrigé à l'aide du signal de sortie calculé et de la valeur de débit actuelle ; et
la transmission du facteur d'étalonnage corrigé pour la correction de la mesure de débit du débitmètre.

2. Procédé selon la revendication 1, dans lequel les paramètres de distorsion d'écoulement comprennent une forme d'un élément de distorsion d'écoulement en amont ou en aval du débitmètre, une taille de l'élément de distorsion d'écoulement en amont ou en aval du débitmètre, une orientation de l'élément de distorsion d'écoulement par rapport au débitmètre, et une distance de l'élément de distorsion d'écoulement par rapport au débitmètre.

3. Procédé selon la revendication 1, dans lequel les paramètres physiques du débitmètre comprennent une forme et une taille de composants du débitmètre.

4. Procédé selon la revendication 1, dans lequel la détermination du régime d'écoulement comprend :
le calcul du nombre de Reynolds sur la base de la valeur de débit actuelle ; et
la sélection d'un régime d'écoulement parmi une pluralité de régimes d'écoulement sur la base du nombre de Reynolds calculé.

5. Procédé selon la revendication 4, dans lequel la pluralité de régimes d'écoulement comprend un régime d'écoulement laminaire, un régime d'écoulement transitoire, et un régime d'écoulement turbulent.

6. Procédé selon la revendication 5, dans lequel la sélection du régime d'écoulement parmi la pluralité de régimes d'écoulement comprend :
la sélection du régime d'écoulement laminaire lorsque le nombre de Reynolds est inférieur ou égal à une première valeur ;
la sélection du régime d'écoulement transitoire lorsque le nombre de Reynolds est compris entre la première valeur et une deuxième valeur, la deuxième valeur étant supérieure à la première valeur ; et
la sélection du régime d'écoulement turbulent lorsque le nombre de Reynolds est supérieur ou égal à la deuxième valeur.

7. Procédé selon la revendication 1, dans lequel la détermination du facteur d'étalonnage corrigé à l'aide du signal de sortie calculé et de la valeur de débit actuelle comprend :
la division du signal de sortie calculé par la valeur de débit actuelle afin de déterminer le facteur d'étalonnage corrigé.

8. Procédé selon la revendication 1, dans lequel la sélection de l'au moins une équation d'écoulement parmi la pluralité d'équations d'écoulement comprend :
la sélection d'une équation de quantité de mouvement d'écoulement laminaire et d'équations associées lorsque le régime d'écoulement est un régime d'écoulement laminaire ;
la sélection d'une équation de quantité de mouvement d'écoulement fluide transitoire et d'équations associées lorsque le régime d'écoulement est un régime d'écoulement transitoire ; et
la sélection d'une équation d'écoulement turbulent et d'équations associées lorsque le régime d'écoulement est un régime d'écoulement turbulent.

9. Système de correction de débit pour la correction de mesures de débit d'un débitmètre (130), le système de correction de débit comprenant :
un processeur (220) ; et
une mémoire (308) couplée en communication avec le processeur, la mémoire stockant des instructions exécutables par le processeur qui, lorsqu'elles sont exécutées, amènent le processeur à :
recevoir au moins l'un des éléments suivants : des paramètres de distorsion d'écoulement, des paramètres physiques et de fonctionnement du débitmètre, une valeur de débit actuelle mesurée par le débitmètre, et des propriétés physiques du fluide ;
déterminer un régime d'écoulement sur la base de la valeur de débit actuelle ;
sélectionner au moins une équation d'écoulement parmi une pluralité d'équations d'écoulement sur la base du régime d'écoulement ;
calculer un signal de sortie sur la base de l'équation d'écoulement sélectionnée et d'au moins l'un des éléments suivants : des équations électromagnétiques et/ou des équations basées sur la physique, les paramètres de distorsion d'écoulement, les paramètres physiques et de fonctionnement du débitmètre, et les propriétés physiques du fluide ;
déterminer un facteur d'étalonnage corrigé à l'aide du signal de sortie calculé et de la valeur de débit actuelle ; et
transmettre le facteur d'étalonnage corrigé pour la correction de la mesure de débit du débitmètre.

10. Système de correction de débit selon la revendication 9, dans lequel les paramètres de distorsion d'écoulement comprennent une forme d'un élément de distorsion d'écoulement en amont ou en aval du débitmètre, une taille de l'élément de distorsion d'écoulement en amont ou en aval du débitmètre, une orientation de l'élément de distorsion d'écoulement par rapport au débitmètre, et une distance de l'élément de distorsion d'écoulement par rapport au débitmètre.

11. Système de correction de débit selon la revendication 9, dans lequel les paramètres physiques du débitmètre comprennent une forme et une taille de composants du débitmètre.

12. Système de correction de débit selon la revendication 9, dans lequel, pour déterminer le régime d'écoulement, le processeur est configuré pour :
calculer le nombre de Reynolds sur la base de la valeur de débit actuelle ; et
sélectionner un régime d'écoulement parmi une pluralité de régimes d'écoulement sur la base du nombre de Reynolds calculé, la pluralité de régimes d'écoulement comprenant un régime d'écoulement laminaire, un régime d'écoulement transitoire ou un régime d'écoulement turbulent.

13. Système de correction de débit selon la revendication 12, dans lequel le processeur est configuré pour :
sélectionner le régime d'écoulement laminaire lorsque le nombre de Reynolds est inférieur ou égal à une première valeur ;
sélectionner le régime d'écoulement transitoire lorsque le nombre de Reynolds est compris entre la première valeur et une deuxième valeur, la deuxième valeur étant supérieure à la première valeur ; et
sélectionner le régime d'écoulement turbulent lorsque le nombre de Reynolds est supérieur ou égal à la deuxième valeur.

14. Système de correction de débit selon la revendication 9, dans lequel, pour déterminer un facteur d'étalonnage corrigé, le processeur est configuré pour : diviser le signal de sortie calculé par la valeur de débit actuelle afin de déterminer le facteur d'étalonnage corrigé.

15. Système de correction d'écoulement selon la revendication 9, dans lequel, pour sélectionner l'au moins une équation d'écoulement parmi la pluralité d'équations d'écoulement, le processeur est configuré pour :
sélectionner une équation de quantité de mouvement d'écoulement laminaire et des équations associées lorsque le régime d'écoulement est un régime d'écoulement laminaire ;
sélectionner une équation de quantité de mouvement d'écoulement fluide transitoire et des équations associées lorsque le régime d'écoulement est un régime d'écoulement transitoire ; et
sélectionner une équation d'écoulement turbulent et des équations associées lorsque le régime d'écoulement est un régime d'écoulement turbulent.
